**Europäisches Patentamt**

**European Patent Office**

**Office européen des brevets**

(19)

(11) Publication number: **0 018 449**

**A1**

(12) # EUROPEAN PATENT APPLICATION

(21) Application number: **79300692.5**

(22) Date of filing: **25.04.79**

(51) Int. Cl.³: **G 02 B 23/10**
**F 41 G 1/30**

(43) Date of publication of application:
**12.11.80** Bulletin **80/23**

(84) Designated Contracting States:
**BE CH DE FR GB IT LU NL SE**

(71) Applicant: **RING SIGHTS LIMITED**
**Woodyers Wonersh**
**Guildford Surrey, GU5 0PB(GB)**

(72) Inventor: **Budden, Raymond George**
**7 Southbrook Road Langstone**
**Havent Hampshire, PO9 1RL(GB)**

(72) Inventor: **Scott, Fraser**
**Woodyers Wonersh**
**Guildford Surrey(GB)**

(74) Representative: **Rennie, Ian Malcolm et al,**
**BOULT, WADE & TENNANT 27 Furnival Street**
**London EC4A 1PQ(GB)**

(54) **Improved collimator gun sight.**

(57) A collimator gun sight has a partially reflecting (19) element in which can be seen a reflected image at infinity of an aiming mark, superimposed on the target field. The reflecting element is a parallel planar faced doublet glass (19) comprising a plano-convex lens (31) and a plano-concave lens (32) formed together at their curved faces. A layer (33) between the two lenses provides a partially reflecting concave surface through which the target field can be viewed. The element (19) is cheap to make and provides reduced aberration, so that the overall length of the sight can be reduced.

EP 0 018 449 A1

BAD ORIGINAL

Croydon Printing Company Ltd.

FIG. 2.

-1-

"IMPROVED COLLIMATOR GUN SIGHT"

The present invention relates to collimator gun sights. With such collimator sights, light from a suitably illuminated graticule pattern or other aiming mark is collimated for presentation to an eye of the user of the weapon as an image of the aiming mark at infinity, or at a predetermined distance where appropriate. In one arrangement, the other eye of the user is free to view the target so that when the brightness levels of the aiming mark and the target are correctly balanced, the user will perceive the aiming point super-imposed on the viewed target. It is also known to provide various arrangements for presenting both the collimated light from the image of the aiming point and light from the target to one or both eyes of the user simultaneously. A simple arrangement for doing this which is known is to provide a partially reflecting concave mirror suitably placed to reflect back to the aiming eye of the user of the weapon light from a device generating the aiming mark. If the distance between the concave mirror and the aiming mark device corresponds to the focal length of the concave mirror, the image seen in the concave mirror will appear to be substantially at infinity. The user of the weapon can then view the target field through the partially reflecting mirror whilst simultaneously seeing the image of the aiming mark at

nn18449

infinity in the mirror. It is usual to ensure that the partially reflecting mirror provides substantially no deflection to light passing through the mirror from the target field so as to minimise any distortion of the target as seen by the user. Thus, it is known to employ a parallel faced meniscus glass for the partially reflecting mirror with one surface of the meniscus glass suitably coated to provide the reflecting surface.

The problem with partially reflecting mirror arrangements of the kind mentioned above, is that simple spherical reflecting surfaces such as are commonly used generate various aberrations in the reflected image of the aiming mark. These aberrations can be kept to a satisfactory level by keeping the ratio of the aperture of the mirror to the focal length as small as possible. However, this has the drawback of providing a relatively long arrangement since the device generating the aiming mark must be at the focal point of the mirror.

Suitable parabolic surfaces could be used for the reflecting element but these are expensive. It has been proposed also to reduce the spherical aberrations produced by the reflecting surface by combining the reflecting surface with a divergent lens immediately in front of it. For example, the divergent lens can be formed with one convex and one concave face and the convex face may be coated to provide the partially reflecting surface. With a suitable combination of ratios of curvature of the two faces of the lens, the spherical aberrations produced at a predetermined distance from the optical axis can be reduced, in theory, the zero. Mirrors of this sort referred to as Mangan mirrors, have been known for many years. U.S. Patent Specification No.3942901 discloses a sight employing this technique. As disclosed in Figure 7 of that

0018449

specification, the partially reflecting mirror can be made as a doublet with the reflecting surface at the interface of the two elements of the doublet. The doublet as a whole can then be shaped to provide substantially no deflection of light passing right through the doublet from the target field to the user of the sight.

Thus, a known prior art collimator gun sight comprises a partially reflecting element in the form of a doublet glass having a layer between the two lenses of the doublet forming a partially reflecting concave surface, means defining an aiming mark and positioned so that an image of the aiming mark can be seen reflected in the surface and superimposed on a target viewed through the partially reflecting element, and means for mounting the partially reflecting element and the aiming mark defining means on a gun such that the line of sight defined by viewing the aiming mark image through the partially reflecting element corresponds to the aim of the gun.

According to the present invention, the doublet glass forming the partially reflecting element of the gun sight comprises a plano-concave lens and a plano-convex lens, joined together at their curved faces which are substantially spherical and of the same radius. The reflecting element of such a sight can be relatively cheaply manufactured, and has a shorter focal length than the same concave mirror in air because of the refractive index of the material of the plano-convex lens. In addition, for a particular ratio of aperture to focal length, the spherical aberration due to the mirror is reduced, which, for a given error, allows the gun sight to be made shorter.

Although the means defining the aiming mark may be positioned before the reflecting concave surface at a distance so that the image of the aiming mark appears to the eye of the user to be at a predetermined distance, it is normal practice to arrange for the image of the aiming mark to appear to be substantially at infinity.

Conveniently, the partially reflecting element is symmetrical about its optical axis which is arranged at an acute angle to said line of sight, the aiming mark defining means being transversely spaced clear of the line of sight. In this way, a clear view is provided of the target through the partially reflecting element, although this latter is slightly tilted to the line of sight.

In a simple arrangement, the means defining an aiming mark comprises an aiming mark generator located in front of the partially reflecting concave surface so that the aiming mark is reflected directly therein. Then, preferably, said mounting means includes means for adjusting the line of sight relative to the aim of the gun when the sight is mounted thereon, thereby enabling the sight to be correctly set up to suit the prevailing wind conditions and the distance of the target. In one arrangement said mounting means includes a rigid carrier carrying both the partially reflecting element and the aiming mark defining means, and a base to be fixedly attached to a gun, the carrier being pivotable relative to the base about an axis perpendicular to the line of sight, the means for adjusting including means for adjusting the angle of the carrier relative to the base about said axis. In a normal arrangement, said pivot axis would be substantially horizontal when the sight is attached to a gun which is in the firing position. It can be seen, therefore, that the adjustment of the carrier relative to the base effectively adjusts the elevation of the sight thereby allowing the sight to be set according to the range of the target. In the above arrangement, said means for adjusting may further include means for adjusting the position of the aiming mark defining means relative to the carrier along a line parallel to said axis of pivot. Thus, adjusting the position of the aiming mark defining means in this way can be employed to compensate the sight for windage according to the prevailing wind conditions.

In another arrangement, the means defining an aiming mark comprise an aiming mark generator and a plane mirror reflecting a virtual image of the aiming mark towards the partially reflecting concave surface. Then the aiming mark generator may be position adjacent the doublet glass, allowing the focal length of the partially reflecting surface to be nearly twice as great for the same overall length of sight.

For zeroing, the plane mirror may be pivotally adjustable about an axis perpendicular to the line of sight and which is substantially horizontal when the sight is attached to a gun which is in the firing position. Also, the aiming mark generator may be adjustable in position along a line which is perpendicular to the line of sight and is substantially horizontal when the sight is attached to a gun which is in the firing position.

The layer between the two lenses of the doublet glass may comprise partially reflective coating on the curved surface of one of the lenses. Various partially reflecting coating are known and may be suitable for this purpose.

An example of the present invention will now be described with reference to the accompanying drawings in which

Figure 1 is a lateral elevation of a collimator gun sight embodying the present invention and

Figure 2 is a schematic diagram further illustrating the optical elements of the sight of Figure 1.

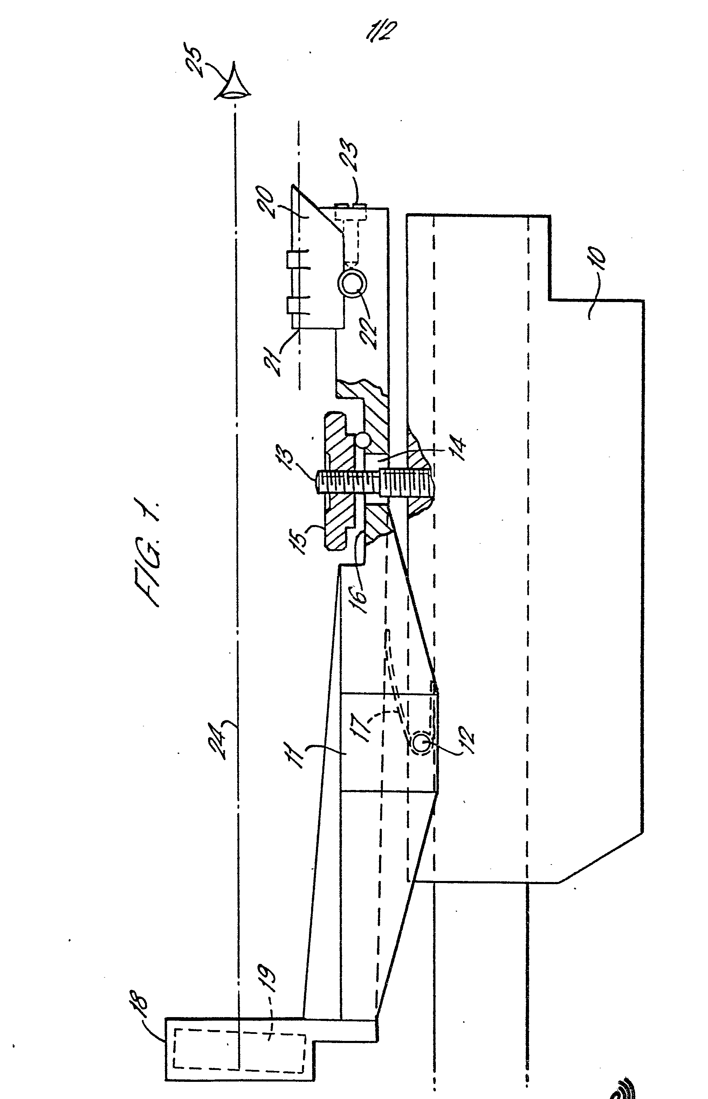

Referring to Figure 1, the sight has a base 10 which is adapted so that the sight can be mounted on a gun.

Various ways are known of fitting sights to guns and any of these may be employed for the present sight. For example, the sight may be fitted on a slide provided above the breech end of the barrel of the gun. A rigid carrier 11 is pivoted to the base 10 about a pivot point 12. A threaded stud 13 is secured in the top of the base 10 so as to extend vertically, when the sight is in the operational position on a weapon, through a hole 14 in the carrier 11. A thumb wheel 15 is screwed on the stud 13 and bears on an upper surface 16 of the carrier 11 to hold the carrier at a predetermined angle relative to the base 10. The carrier 11 is pressed firmly against the thumb wheel 15 by means of a spring 17 which tends to rotate the carrier 11 relative to the base 10 in an anti-clockwise direction. The spring 17 may be of any suitable form, such as a leaf spring, coil spring or the like, or an helical torsion spring such as illustrated in the figure.

At a front end of the carrier 11 there is secured a frame 18 holding a partially reflecting element 19. At a back end of the carrier 11, there is mounted a device 20 for defining an aiming mark. Various forms of such devices are well known in the art of collimator gun sights and various prior art devices can be used in this example of the present invention. In each case, the device 20 should provide an illuminated aiming mark, light from which can be reflected in the partially reflecting element 18. As will be described later herein the reflecting element 18 is arranged to produce a virtual image of the aiming mark, substantially at infinity superimposed on the field view seen through the element 19.

In the example of Figure 1, the aiming mark defining device 20 provides an aiming mark whose centre point is indicated by the reference 21. This centre point 21 may be the centre of an illuminated circle or the point of

0018449

intersection of crosshairs or any other suitable mark. The device 20 is mounted on the carrier 11 so as to be adjustable in position along a line parallel with the axis of the pivot point 12 of the carrier relative to the base 10. The device 20 may be adjusted in position along this line by rotating a worm gear 22 by means of a thumb wheel (not shown). The device 20 can be secured in a selected position by means of a locking screw 23.

As will be explained later, the geometrical arrangement of the partially reflecting element 19 and the centrpoint 21 of the aiming mark is such that a line of sight 24 is defined by viewing an image of the aiming mark 21, e.g. with an eye 25, as reflected in the element 19.

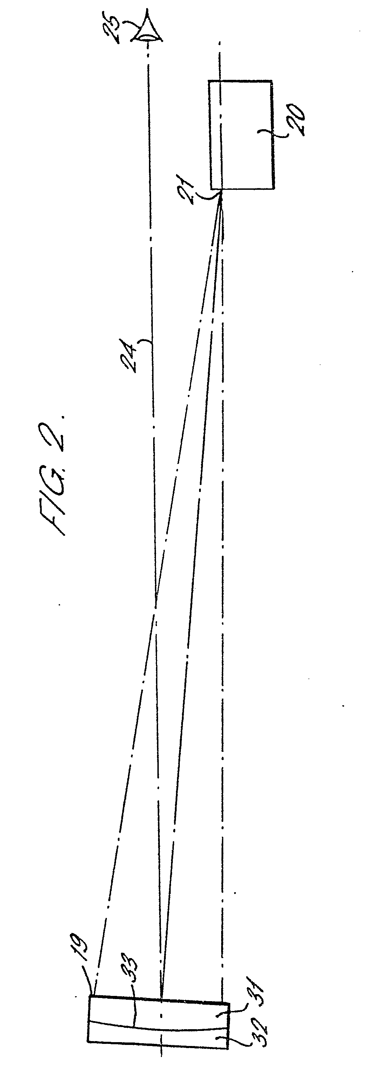

Referring now to Figure 2, the partially reflecting element 19 is formed as a doublet glass comprising a plano-convex lens 31 and a plano-concave lens 32. Each of the lenses 31 and 32 are symmetrical and have substantially spherical curved surfaces of common radius. The lenses 31 and 32 are joined together at their curved surfaces so that their respective planar surfaces are parallel with each other. A partially reflecting layer 33 is provided between the two lenses 31 and 32 so as to form a partially reflecting concave mirror when viewed from the right hand side in Figure 2. Various materials may be employed to provide the partially reflecting layer 33. For example, one of the curved surfaces of the lenses 31 and 32 may be coated with, for example, silver, aluminium, gold, copper or chrome. The choice of coating material is dependent on the colours required to be preferentially reflected and transmitted. The reflectivity of the surface 33 in relation to the transmissivity of the combined element 19 is selected so that the image of the aiming mark 21 is viewed through the element 19 and superimposed on the target field is of a comparable brightness with the target field. Generally speaking, it is desirable for the transmissivity of the element 19 to be as high as possible so that the sight can be used in low ambient light levels. However, then the reflectivity of the surface 33 must be sufficiently high to provide an aiming mark image of corresponding brightness. The reflecting layer 33 may , alternatively, be formed as a multi layer coating of the kind well known in the optical arts for reflecting light at certain wave lengths. Such coatings are commonly made of layers of for example magnesium fluoride and zinc sulphide.

In forming the element 19 the two lenses 31 and 32 are normally joined together by cementing after the reflecting layer 33 has been applied to one of the curved surfaces.

It can be seen that the plano-convex lens 31 positioned immediately before the partially reflecting surface 33 acts effectively to increase the focusing power of the concave mirror. As a result, the combined element 19 provides a partially reflecting element having a focal length rather shorter than that determined purely by the radius of curvature of the mirror surface. In fact, the focal length of the element can be calculated as the radius of curvature of the mirror divided by twice the refractive index of the material used for the lens 31. It will be appreciated that, for the target field viewed through the element 19 to be distorted by a minimum amount, the two lenses 31 and 32 should be made of material having similar refractive indices. Normally, the two lenses will be made of identical materials, for example glass.

In order that the device 20 producing the aiming mark 21 is displaced away from the line of sight 24 between the eye 25 and the image of the aiming mark, the lens element 19 has its optical axis slightly tilted relative to the line of sight 24, so as to bisect the angle between the line of sight 24 and the straight line between the centre point 21 of the aiming mark and the centre of the element 19.

In a practical example, the element 19 may be formed of two lenses of glass with refractive index 1.523. The radius of curvature of the surface 23 may be 286.918 millimetres, producing focal length of the partially reflecting element approximately 94.195 millimetres. In practice, the centre point 21 of the aiming mark is positioned 9.64 millimetres from the plane perpendicular to the line of sight 24 containing the intersection of the line of sight with the planar face of the lens 31, so as to produce an image of the centre point 21 substantially at infinity. The actual diameter of the element 19 is 16 millimetres although the diameter of the clear region perpendicular to the line of sight 24 is reduced to 14.5 millimetres. The axial thickness of the lens 31 is three millimetres and that of the lens 32 is two millimetres making a combined element thickness of 5 millimetres. The element 19 is tilted relative to the line of sight 24 by $2\frac{1}{2}^{\circ}$ thereby permitting the centre point 21 of the aiming mark to be positioned 8.22 millimetres off the line of sight 24, giving a clear view past the device 20 through the element 19.

The example of collimator sight with the dimensions given above is especially suited for use with a pistol or other weapon with a sight not close to the eye and the residual errors due to spherical aberration, coma etc., in the image of the aiming mark are small in comparison with the other aiming errors normally encountered with such weapons. As mentioned previously, the device 20 for producing the aiming mark may be of any suitable form.

The aiming mark may be produced by reflection of ambient light from the surface of a graticule or pattern defining the mark into the aperture of the partially reflecting element 19. The device 20 may be designed so that the ambient light is taken primarily from the sky, or from the area of target i.e. the direction in which the sight is pointing. Alternatively, an artificial light source may be employed to illuminate the reflecting graticule pattern. In all cases, the pattern itself may be lit relative to the background (dark field) so that it appears as a bright pattern superimposed on the target when viewed through the partially reflecting element 19, or the background of the graticule pattern may be lit (light field). The graticule pattern may be transmissive, rather than reflective, so as to be illuminated by the transmission of light from behind the graticule pattern through the pattern into the aperture of the element 19. Again such an arrangement may provide a dark or a light field and the light to be transmitted through the graticule may be ambient light or light from an artificial source. In such a transmissive arrangement, ambient light from the sky may be reflected into the graticule by a totally reflecting surface, or ambient light may be transmitted to the graticule pattern by means of a diffusing probe, which may itself be of fluorescent material. When the graticules are illuminated from an artificial source, this may be provided by a betalight, or a light emitting diode, or a filament lamp. The arrangement may provide for the provision of both ambient and artifical light, whereby the graticule is illuminated by ambient light during normal daylight use, but by artificial light for low ambient light and night time use. A suitable graticule for use in the device 20 for producing the aiming mark may be such as described in our co-pending Application No.44675/75.

0018449

Alternatively, the graticule arrangement described in our co-pending Application No.14595/76 may be employed.

It will be appreciated that the mounting arrangement described in the present example and particularly illustrated in Figure 1 effectively enables the sight to be adjusted so that the aiming mark as viewed along the line of sight 24 correctly designates the target at which the associated weapon is aiming. The thumb wheel 15 can be employed to adjust the elevation of the sight, effectively tilting the entire sight, relative to the base 10, and the thumb wheel for rotating the worm gear 22 can be used to adjust the lateral positioning of the aiming mark to account for windage. Other arrangements may be employed for setting up the sight. For example, the attitude of the element 19, or of the lens mount 18 may be adjustable relative to the rest of the sight.

In another arrangement, the aiming mark defining device may be replaced by a plane mirror, and the aiming mark generator itself may be located adjacent the doublet glass 19 and directed towards the plane mirror so that an image of the aiming mark is reflected into the doublet glass. The focal length of the doublet glass can then be nearly doubled. Also zeroing can be accomplished by making the plane mirror pivotally adjustable about a horizontal axis perpendicular to the line of sight (for elevation), and the generator adjustable in position along a horizontal line also perpendicular to the line of sight (for windage).

Various other arrangements for the complete sight are envisaged. The aiming mark defining device may include a reflective graticule formed of a fluorescent paint or ink to enhance the visibility of the graticule and the resulting aiming mark in low ambient light conditions. Alternatively the graticule may be formed of a phosphorescent material so as to be visible even in pitch darkness for a period of time,after exposure to light or other radiation or even simply a source of conducted heat. The reflecting surface of the graticule may itself be phosphorescent or instead a separate phosphorescent light source may be employed to illuminate the graticule, whether reflective or transmissive. Such a phosphorescent light source may be desirable where it is required to avoid the use of radioactive materials as are employed in a betalight.

Further, the mechanical structure of the sight may be varied. The partially reflecting element of the sight may be mounted in a housing or frame directly attached to the gun, instead of on a separate carrier as in the example of Figure 1. Then, the aiming mark defining device is arranged to be adjustable both horizontally and vertically to zero the sight for both elevation and windage. The aiming mark defining device may, for example, be attached to or incorporated in the normal adjustable back sight of a gun.

-1-

CLAIMS:-

1. A collimator gun sight comprising a partially reflecting element in the form of a doublet glass (19) having a layer (33) between the two lenses (31, 32) of the doublet forming a partially reflecting concave surface, means (20) defining an aiming mark (21) and positioned so that an image of the aiming mark can be seen reflected in the surface and superimposed on a target viewed through the partially reflecting element, and means (11-17) for mounting the partially reflecting element and the aiming mark defining means on a gun such that the line of sight defined by viewing the aiming mark image through the partially reflecting element corresponds to the aim of the gun, characterised in that the doublet glass (19) comprises a plano-concave lens (32) and a plano-convex lens (31) joined together at their curved faces which are substantially sperical and of the same radius.

2. A gun sight as claimed in claim 1 characterised in that the partially reflecting element (19) is symmetrical about its optical axis which is arranged at an acute angle to said line of sight (24), the aiming mark defining means (20) being transversely spaced clear of the line of sight.

3. A gun sight as claimed in claim 1 or claim 2 characterised in that the means defining an aiming mark comprise an aiming mark generator located in front of the partially reflecting concave surface so that the aiming mark is reflected directly therein.

4. A gun sight as claimed in claim 3 characterised.

in that said mounting means includes means (15, 22) for adjusting the line of sight relative to the aim of the gun when the sight is mounted thereon, thereby enabling the sight to be correctly set up to suit the prevailing wind conditions and the distance of the target.

5. A gun sight as claimed in claim 4 characterised in that said mounting means includes a rigid carrier (11) carrying both the partially reflecting element and the aiming mark defining means, and a base (10) to be fixedly attached to a gun, the carrier being pivotable relative to the base about an axis (12) perpendicular to the line o sight, the means for adjusting includes means (13,15,17) for adjusting the angle of the carrier relative to the base about said axis.

6. A gun sight as claimed in claim 5 characterised in that said pivot axis (12) is arranged to be substantially horizontal when the sight is attached to a gun which is in the firing position.

7. A gun sight as claimed in claim 6 characterised in that wherein said means for adjusing further includes means (22,23) for adjusting the position of the aiming mark defining means relative to the carrier along a line parallel to said axis of pivot.

8. A gun sight as claimed in claim 1 or claim 2 characterised in that the means defining an aiming mark comprise an aiming mark generator and a plane mirror reflecting a virtual image of the aiming mark towards the partially reflecting concave surface.

0018449

9.   A gun sight as claimed in claim 8 characterised in that the aiming mark generator is positioned adjacent the doublet glass.

10.   A gun sight as claimed in claim 9 characterised in that wherein plane mirror is pivotally adjustable about an axis perpendicular to the line of sight and which is substantially horizontal when the sight is attached to a gun which is in the firing position.

11.   A gun sight as claimed in either of claims 9 and 10 characterised in that the aiming mark generator is adjustable in position along a line which is perpendicular to the line of sight and is substantially horizontal when the sight is attached to a gun which is in the firing position.

12.   A gun sight as claimed in any preceding claim characterised in that the layer between the two lenses of the doublet glass comprises a partially reflective coating on the curved surface of one of the lenses.

13.   A gun sight as claimed in any preceding claim characterised in that the means defining the aiming mark includes a reflective fluorescent graticule.

14.   A gun sight as claimed in any preceding claim characterised in that the means defining the aiming mark includes a graticule formed of a phosphorescent material.

15.   A gun sight as claimed in any preceding claim characterised in that the means defines the aiming mark includes a graticule and a phosphorescent light source for illuminating the graticule.

16.    A gun sight as claimed in claim 1 in combination with a gun characterised in that the partially reflecting element is immovably attached to the gun and the aiming mark defining device is adjustable horizontally and vertically for zeroing the sight.

17.    A gun sight and gun combination as claimed in claim 16, characterised in that the gun has an adjustable back sight and the aiming mark defining device is attached to and adjustable with the back sight.

IMR/REC/DCB/FA 8850

FIG. 1.

FIG. 2.

European Patent Office

**EUROPEAN SEARCH REPORT**

Application number

EP 79 30 0692

| | DOCUMENTS CONSIDERED TO BE RELEVANT | | CLASSIFICATION OF THE APPLICATION (Int Cl ³) |
|---|---|---|---|
| Category | Citation of document with indication, where appropriate, of relevant passages | Relevant to claim | |
| A | <u>DE - A - 2 413 891</u> (EKSTRAND)<br>* Claims 1,2,6-12,16 *<br><br>-- | 1 | G 02 B 23/10<br>F 41 G  1/30 |
| A | <u>US - A - 2 780 130</u> (P.B. MAUER)<br>* Claim 1; figure 1 *<br><br>-- | 1 | |
| A | <u>GB - A - 1 466 707</u> (AGA)<br>* Page 2, lines 40-64 *<br><br>-- | 1 | |
| A | <u>US - A - 2 633 051</u> (C.S. DAVIS)<br>* Claims *<br><br>-- | 1 | TECHNICAL FIELDS SEARCHED (Int.Cl. ³)<br><br>G 02 B 23/10<br>F 41 G  1/30<br>       1/32<br>       1/38<br>       1/14 |
| A | <u>US - A - 3 565 539</u> (J. LARUSSA)<br>* Abstract; figures 1,2.4 *<br><br>-- | 1 | |
| A | <u>US - A - 3 589 796</u> (C.F. SCHAEFER)<br>* Claims; figures *<br><br>---- | 1 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-12-1979 | PFAHLER |

EPO Form 1503.1  06.78

BAD ORIGINAL